# EUROPEAN PATENT APPLICATION

(11) **EP 4 685 107 A1**
(43) Date of publication of application: **28.01.2026**
(21) Application number: 23928199.1
(22) Date of filing: 06.06.2023
(51) Int. Cl.: C01B 25/37, C01B 25/45

(54) **METHOD FOR PREPARING LITHIUM IRON PHOSPHATE PRECURSOR FROM HIGH-IRON RED MUD**

(30) Priority: 22.03.2023 CN 202310290057
(71) Applicant: Zhengzhou Non-Ferrous Metals Research Institute Co. Ltd of Chalco, Shangjie District Zhengzhou, Henan 450041 (CN)
(72) Inventor: KANG, Zeshuang, Zhengzhou, Henan 450041 (CN); TIAN, Ye, Zhengzhou, Henan 450041 (CN); LIU, Zhongkai, Zhengzhou, Henan 450041 (CN); LI, Huaxia, Zhengzhou, Henan 450041 (CN); YAN, Kun, Zhengzhou, Henan 450041 (CN); ZHANG, Tengfei, Zhengzhou, Henan 450041 (CN); ZHANG, Yanli, Zhengzhou, Henan 450041 (CN); SUN, Fengjuan, Zhengzhou, Henan 450041 (CN)
(74) Representative: Valet Patent Services Limited
(86) International application number: PCT/CN2023/098545
(87) International publication number: WO 2024/192892

(57) **Abstract**

A method for preparing a lithium iron phosphate precursor from a high-iron red mud is provided according to the invention, comprising: mixing the high-iron red mud and an acid solution, and then leaching to obtain a red mud leachate; mixing the red mud leachate and a phosphate, and then performing a first homogeneous reaction to obtain a primary homogeneous solution; adjusting a pH value and iron-phosphorus ratio of the primary homogeneous solution, and then performing a second homogeneous reaction to obtain a secondary homogeneous solution; and precipitating the secondary homogeneous solution to obtain the lithium iron phosphate precursor.

## Description

### CROSS-REFERENCE TO RELATED APPLICATION

This application claims the priority to Chinese patent application No. 202310290057.9, filed on March 22, 2023 and entitled "Method for preparing lithium iron phosphate precursor from high-iron red mud", the entire contents of which are incorporated herein by reference.

### TECHNICAL FIELD

The invention relates to the field of comprehensive utilization of wastes, and in particular to a method for preparing a lithium iron phosphate precursor from high-iron red mud.

### BACKGROUND

A red mud is an industrial solid waste generated during alumina is produced. An iron oxide in the red mud ranges generally from 10% to 60% in content, and is a main component of the red mud. Therefore, an iron element is one of metal elements in the red mud that has recycling value. Iron minerals in the red mud are mainly a hematite, a goethite, etc., which have weak magnetic properties. A conventional magnetic separation method can only recover a small portion of the iron minerals. A high-intensity magnetic separation and magnetic roasting method is characterized by large investment and high energy consumption and so on. Especially for a high-iron red mud mainly composed of a goethite, a magnetic roasting is difficult to control.

A market demand for new energy materials continues to expand, and a ferric phosphate, as a lithium iron phosphate precursor that is a new energy material, is in short supply. There is currently an imbalance between supply and demand, and thus a huge market gap exists. Abundant iron in the red mud can be used as raw material for preparing a ferric phosphate. Reserve advantages and cost advantages of the red mud provide favorable conditions for the red mud to be used as a source of precursor raw materials for new energy materials, and it is also the main way to achieve high value-added utilization of the red mud. At present, the common method for preparing an iron(III) phosphate dihydrate from the red mud is to use a concentrated acid leaching method to convert iron compounds into trivalent iron ions and divalent iron ions to react with a phosphoric acid to form a precipitation of the iron(III) phosphate dihydrate. In a process of forming the precipitation of the iron(III) phosphate dihydrate, a solid-liquid separation is implemented by a concentrated acid leaching, and adding additives and extractants in a plurality of steps, to obtain a final product. However, the process of forming the precipitation of the iron(III) phosphate dihydrate is complicated and lacks a consideration of characteristics of the iron phosphate material.

### SUMMARY

A purpose of the invention is to provide a method for preparing a lithium iron phosphate precursor from a high-iron red mud, so as to solve a technical problem that exogenous substances need to be added when preparing an iron(III) phosphate dihydrate from a red mud in the related art.

A method for preparing a lithium iron phosphate precursor from a high-iron red mud is provided according to the invention, including: mixing the high-iron red mud and an acid solution, and then leaching to obtain a red mud leachate; mixing the red mud leachate and a phosphate, and then performing a first homogeneous reaction to obtain a primary homogeneous solution; adjusting a pH value and iron-phosphorus ratio of the primary homogeneous solution, and then performing a second homogeneous reaction to obtain a secondary homogeneous solution; and precipitating the secondary homogeneous solution to obtain the lithium iron phosphate precursor.

### BRIEF DESCRIPTION OF DRAWINGS

The accompanying drawing, which is incorporated in and constitutes a portion of this specification, and illustrates embodiments consistent with the invention and serves to explain principles of the invention together with the description. In order to more clearly illustrate the embodiments of the invention or the technical solutions in the related art, the accompanying drawings needed to be used in the description of the embodiments or the related art will be briefly introduced below. Obviously, for those skilled in the art, other accompanying drawings can also be obtained based on these accompanying drawings without creative efforts.

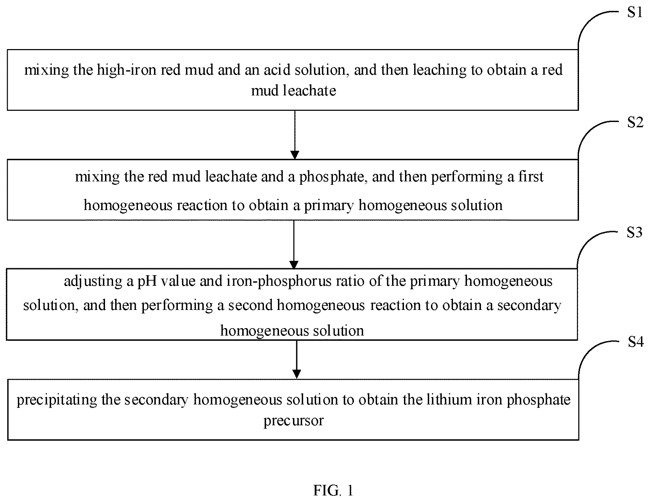

FIG. 1 shows a flow chart of a method for preparing a lithium iron phosphate precursor from a high-iron red mud according to some embodiments of the invention.

### DETAILED DESCRIPTION

The invention will be described in detail below in conjunction with embodiments and examples, and the advantages and various effects of the invention will be more clearly presented. Those skilled in the art should understand that these embodiments and examples are used to illustrate the invention rather than to limit the invention. Throughout the specification, unless otherwise specifically stated, the terms used herein should be understood as having the meanings commonly used in the art. Therefore, unless defined otherwise, all technical and scientific terms used herein have the same meaning as commonly understood by those skilled in the art to which this invention belongs. In case of conflict, this manual shall prevail. Unless otherwise specified, various raw materials, reagents, instruments, and equipment used in the disclosure are commercially available or obtained through existing methods. Various embodiments of the present disclosure may exist in the form of a range; it should be understood that the description in the form of a range is only for convenience and simplicity and should not be understood as a hard limit to the scope of the present disclosure; therefore, the described range should be considered to have specifically disclosed all possible subranges as well as the single values within such a range. For example, a description of a range from 1 to 6 should be considered to have disclosed subranges, such as from 1 to 3, from 1 to 4, from 1 to 5, from 2 to 4, from 2 to 6, and from 3 to 6, and a single number within the stated range, such as 1, 2, 3, 4, 5, and 6, which applies regardless of the range. Additionally, whenever a numerical range is indicated herein, it is intended to include any cited number (fractional or whole) within the indicated range. In the disclosure, unless otherwise specified, the directional words used such as "upper" and "lower" refer specifically to the direction of the figure in the drawing. In addition, in the description of the present disclosure, the terms "including", "comprising" and the like refer to "including but not limited to". Moreover, the terms "comprise," "include," or any other variations thereof are intended to cover non-exclusive inclusion, such that a process, method, article, or apparatus that includes a list of elements includes not only those elements but also other elements not expressly listed, or also includes elements inherent to such process, method, article, or apparatus. In the disclosure, relational terms such as "first" and "second" are merely used to distinguish one entity or operation from another and do not necessarily require or imply any such actual relationship or sequence between these entities or operations. In the disclosure, "and/or" describes the relationship between associated objects, indicating that there may be three relationships. For example, A and/or B may refer to: A alone, both A and B, and B alone. For the association relationship of more than three associated objects described by "and/or", it means that any one of the three associated objects can exist alone, or at least two of them can exist at the same time. For example, for A, and/or B, and/or C, it can mean that any one of A, B, and C exists alone, or any two of them exist at the same time, or three of them exist at the same time. In the disclosure, "at least one" refers to one or more, and "plurality" refers to two or more. "At least one", "at least one of the following" or similar expressions thereof refers to any combination of these items, including single items or any combination of plural items. For example, "at least one of a, b, or c", or "at least one of a, b, and c" may represent: a, b, c, a-b (that is, a and b) , a-c, b-c, or a-b-c in which a, b, and c can each be single or multiple.

As shown in FIG. 1, the invention provides a method for preparing a lithium iron phosphate precursor from a high-iron red mud. The method includes: S1, mixing a high-iron red mud and an acid solution in a certain proportion into a slurry, to be subjected to a pressure and heated leaching, and a solid-liquid separation, to obtain a red mud leachate; S2, mixing and heating the red mud leachate and a phosphate for a homogeneous reaction to obtain a primary homogeneous solution; S3, regulating a pH and iron-phosphorus ratio of the primary homogeneous solution by phosphate , followed by reacting for a certain period of time, and then performing a solid-liquid separation thereon to obtain a secondary homogeneous solution; S4, naturally cooling the secondary homogeneous solution to a room temperature, then adding a cold water for dilution, and then performing a low-temperature precipitation and aging for a period of time, followed by performing a solid-liquid separation to obtain a precipitate; and S5, washing and drying the precipitate multiple times to obtain an iron(III) phosphate dihydrate.

In some embodiments, a mass concentration of a hydrochloric acid solution ranges from 2.5 mol/L to 5.4 mol/L.

The reason for controlling the mass concentration of the hydrochloric acid solution to range from 2.5 mol/L to 5.4 mol/L is that it is advantageous to a leaching of a valuable iron element in red mud and a subsequent separation of ferric phosphate. If the concentration is too high, inactive substances will also be leached, and thus there are too many impurities and an acid concentration is too high, resulting in a strong harmfulness. If the concentration is too low, it is not advantageous to the leaching of the valuable iron element.

In some embodiments, a temperature ranges from 110°C to 230°C.

A reason for controlling a temperature of the leaching of the slurry of the red mud to range from 110°C to 230°C is that it is advantageous to the leaching of the valuable iron element in the red mud. If the temperature is too high, it is dangerous, and too much insoluble impurities will be dissolved out. If the temperature is too low, less iron will be leached. Since a selected acid concentration is medium concentration, a high temperature leaching is required.

In S2, the red mud leachate and a phosphate are mixed and heated for a homogeneous reaction to obtain a primary homogeneous solution;

In some embodiments, the phosphate includes normal salts and acid salts. The normal salts include a sodium phosphate Na₃PO₄, a calcium phosphate Ca₃(PO₄)₂. The acid salts include dihydrogen salts such as a sodium dihydrogen phosphate NaH₂PO₄ and an ammonium dihydrogen phosphate NH₄H₂PO₄, but a phosphoric acid is not used.

The reason for not using the phosphoric acid is that the phosphoric acid cannot directly react with trivalent iron ions to form a precipitate, and will further reduce a pH, resulting in excessively strong acidity.

In some embodiments, a molar ratio of the phosphate to aluminum ions in a solution ranges from 3 - 5:1.

The reason for controlling the molar ratio of the phosphate to the aluminum ions in the solution to range from 3-5:1 is that it is advantageous to a generation of other phosphate such as an aluminum phosphate for impurity removal and subsequent separation of ferric phosphate. If the molar ratio is too large, it will lead to excessive impurities in the phosphate. If the molar ratio is too small, it will easily lead to excessive aluminum and other impurities, affecting a quality of ferric phosphate.

In some embodiments, a heating temperature ranges from 80°C to 100°C.

Controlling the heating temperature to range from 80°C to 100°C is advantageous for separation according to characteristics of the phosphate that have different solubility at different temperatures. If the heating temperature is too low, the ferric phosphate and the aluminum phosphate are caused to precipitate together. If the heating temperature is too high, a water is caused to evaporate too quickly, thereby affecting a concentration of a system. In addition, a too high temperature is unsafe and is not conducive to a safe reaction of the system.

S3, a pH and iron-phosphorus ratio of the primary homogeneous solution are regulated by phosphate to react for a certain period of time, and then a solid-liquid separation is performed thereon to obtain a secondary homogeneous solution;

In some embodiments, the phosphate includes normal salts and acid salts. The normal salts include a sodium phosphate Na₃PO₄, a calcium phosphate Ca₃(PO₄)₂. The acid salts include dihydrogen salts such as a sodium dihydrogen phosphate NaH₂PO₄ and an ammonium dihydrogen phosphate NH₄H₂PO₄, but a phosphoric acid is not used.

The phosphate is used to regulate a pH value because the phosphate include acidic types and alkaline types. Generally speaking, a dihydrogen phosphate is acidic, while a monohydrogen phosphate and a normal salt are alkaline. Therefore, without adding exogenous substances, the phosphate can be used to control the iron-phosphorus ratio and adjust the pH.

S4, the secondary homogeneous solution is naturally cooled to a room temperature, adding a cold water for a dilution, and a low-temperature precipitation and aging is performed for a period of time to obtain a precipitate after a solid-liquid separation;
In some embodiments, a time for the aging ranges from 12 h - 36 h.

The reason for controlling the time for the aging to range from 12h to 36h is to make the ferric phosphate to react fully. A newly prepared ferric phosphate is still unstable and needs to be aged for a period of time to stabilize properties thereof. An adverse effect of a shorter time for the aging will cause the ferric phosphate to be unstable.

S5, the precipitate is washed and dried multiple times to obtain an iron(III) phosphate dihydrate.

The disclosure is further described below in conjunction with specific examples. Experimental methods without specifying specific conditions in the following examples are typically performed in accordance with national standards in China. If there are no corresponding national standards in China, general international standards, conventional conditions, or conditions recommended by the manufacturer shall be followed.

Chemical constituents of the high-iron red mud used in the following examples and comparative examples are shown in Table 1.

**Table 1 Main components in high-iron red mud/ω%**

| Fe₂O₃ | Al₂O₃ | SiO₂ | | TiO₂ | K₂O | Na₂O | CaO | MgO |
|---|---|---|---|---|---|---|---|---|
| 61.48 | 13.47 | 4.08 | | 6.90 | 0.01 | 1.79 | 0.079 | 0.0026 |

Example 1. A method for preparing a lithium iron phosphate precursor from a high-iron red mud is used which includes: mixing a red mud and 5.4 mol/L hydrochloric acid at a liquid-to-solid ratio of 15 to uniformly form a slurry, and pouring the slurry into a high-temperature reactor for a leaching reaction at 230°C for 6 hours at a pressure of 2 Mpa, and then performing, after the leaching reaction is completed, a solid-liquid separation to obtain a red mud leachate; then, adding a phosphate into the red mud leachate and slowly raising a temperature to 100°C, where a molar ratio of an added amount of the phosphate to aluminum ions is 5:1, and then performing a solid-liquid separation to obtain a homogeneous solution; subsequently adding the phosphate into the primary homogeneous solution to adjust a pH thereof to be 1.8 and control a iron-phosphorus ratio to range from 0.96-1.02, and then reacting at 100° C for 90 minutes, followed by performing a solid-liquid separation on the first homogeneous , to obtain a secondary homogeneous solution; adding pure water which has 8% of a volume of the secondary homogeneous solution, into the secondary homogeneous solution for cooling and dilution, and cooling rapidly for precipitation, where a precipitation temperature is 1°C, to finally obtain an iron(III) phosphate dihydrate product. The iron(III) phosphate dihydrate product is tested, and results are shown in Table 2.

**Table 2**

| Items | Standards of iron(III) phosphate dihydrate | Product of Example 1 |
|---|---|---|
| Iron (Fe) w/% | 28.5-30.0 | 29.1 |
| Phosphorus (P) | 16.2-17.2 | 16.54 |
| Iron-phosphorus ratio (Fe:P) | 0.96-1.02 | 0.9756 |
| Calcium (Ca) ≤ | 0.005 | 0.003 |
| Magnesium (Mg) ≤ | 0.005 | 0.003 |
| Sodium (Na) ≤ | 0.01 | 0.005 |
| Potassium (K) ≤ | 0.01 | 0.004 |
| Copper (Cu) ≤ | 0.005 | - |
| Zinc (Zn) ≤ | 0.005 | - |
| Manganese (Mn) ≤ | 0.02 | - |
| Aluminum (Al) ≤ | 0.03 | 0.01 |
| Titanium (Ti) ≤ | 0.15 | 0.02 |
| Cobalt (Co) ≤ | 0.005 | - |
| Plumbum (Pb) ≤ | 0.01 | - |
| Chromium (Cr) ≤ | 0.005 | - |
| Water content | 19.0-21.0 | 19.5 |
| Tap density/(g/cm³)≥ | 0.6 | 0.7 |
| Particle size (D₃₀)/µm | 1-6 | 3 |

Example 2. A method for preparing a lithium iron phosphate precursor from a high-iron red mud is used which includes: mixing a red mud and 2.5 mol/L hydrochloric acid at a liquid-to-solid ratio of 7 to uniformly form a slurry, and pouring the slurry into a high-temperature reactor for a leaching reaction at 110°C for 3 hours at a pressure of 0.5 Mpa, and then performing, after the leaching reaction is completed, a solid-liquid separation to obtain a red mud leachate ; then, adding a phosphate into the red mud leachate and slowly raising a temperature to 80°C, where a molar ratio of an added amount of the phosphate to aluminum ions is 3:1, and then performing a solid-liquid separation to obtaining a homogeneous solution; subsequently adding the phosphate into the primary homogeneous solution to adjust a pH thereof to be 6.0 and control an iron-phosphorus ratio to range from 0.96-1.02, and then reacting at 80°C for 30 minutes, followed by performing a solid-liquid separation on the first homogeneous , to obtain a secondary homogeneous solution; adding pure water which has 2% of a volume of the secondary homogeneous solution, into the secondary homogeneous solution for cooling and dilution, and cooling rapidly for precipitation, where a precipitation temperature is 9°C, to finally obtain an iron(III) phosphate dihydrate product. The iron(III) phosphate dihydrate product is tested, and results are shown in Table 3.

**Table 3**

| Items | Standards of iron(III) phosphate dihydrate | Product of Example 2 |
|---|---|---|
| Iron (Fe) w/% | 28.5-30.0 | 28.9 |
| Phosphorus (P) | 16.2-17.2 | 16.66 |
| Iron-phosphorus ratio (Fe:P) | 0.96-1.02 | 0.9619 |
| Calcium (Ca) ≤ | 0.005 | 0.002 |
| Magnesium (Mg) ≤ | 0.005 | 0.004 |
| Sodium (Na) ≤ | 0.01 | 0.006 |
| Potassium (K) ≤ | 0.01 | 0.007 |
| Copper (Cu) ≤ | 0.005 | - |
| Zinc (Zn) ≤ | 0.005 | - |
| Manganese (Mn) ≤ | 0.02 | - |
| Aluminum (Al) ≤ | 0.03 | 0.02 |
| Titanium (Ti) ≤ | 0.15 | 0.05 |
| Cobalt (Co) ≤ | 0.005 | - |
| Plumbum (Pb) ≤ | 0.01 | - |
| Chromium (Cr) ≤ | 0.005 | - |
| Water content | 19.0-21.0 | 19.3 |
| Tap density/(g/cm³)≥ | 0.6 | 0.8 |
| Particle size (D₅₀)/µm | 1-6 | 4 |

Example 3. A method for preparing a lithium iron phosphate precursor from a high-iron red mud is used which includes: mixing a red mud and 3.0 mol/L hydrochloric acid at a liquid-to-solid ratio of 10 to uniformly form a slurry, and pouring the slurry into a high-temperature reactor for a leaching reaction at 150°C for 4 hours at a pressure of 1 Mpa, and then performing, after the leaching reaction is completed, a solid-liquid separation to obtain a red mud leachate; then, adding a phosphate into the red mud leachate and slowly raising a temperature to 85°C, where a molar ratio of an added amount of the phosphate to aluminum ions is 3.5:1, and then performing a solid-liquid separation to obtain a homogeneous solution; subsequently adding the phosphate into the primary homogeneous solution to adjust a pH thereof to be 3.0 and control an iron-phosphorus ratio to range from 0.96-1.02, and then reacting at 85°C for 50 minutes, followed by performing a solid-liquid separation on the first homogeneous, to obtain a secondary homogeneous solution; adding pure water, which has 4% of a volume of the secondary homogeneous solution, into the secondary homogeneous solution for cooling and dilution, and cooling rapidly for precipitation, where a precipitation temperature is 4°C, to finally obtain an iron(III) phosphate dihydrate product. The iron(III) phosphate dihydrate product is tested, and results are shown in Table 4.

**Table 4**

| Items | Standards of iron(III) phosphate dihydrate | Product of Example 3 |
|---|---|---|
| Iron (Fe) w/% | 28.5-30.0 | 29.0 |
| Phosphorus (P) | 16.2-17.2 | 16.31 |
| Iron-phosphorus ratio (Fe:P) | 0.96-1.02 | 0.9859 |
| Calcium (Ca) ≤ | 0.005 | 0.003 |
| Magnesium (Mg) ≤ | 0.005 | 0.004 |
| Sodium (Na) ≤ | 0.01 | 0.007 |
| Potassium (K) ≤ | 0.01 | 0.003 |
| Copper (Cu) ≤ | 0.005 | - |
| Zinc (Zn) ≤ | 0.005 | - |
| Manganese (Mn) ≤ | 0.02 | - |
| Aluminum (Al) ≤ | 0.03 | 0.01 |
| Titanium (Ti) ≤ | 0.15 | 0.08 |
| Cobalt (Co) ≤ | 0.005 | - |
| Plumbum (Pb) ≤ | 0.01 | - |
| Chromium (Cr) ≤ | 0.005 | - |
| Water content | 19.0-21.0 | 19.6 |
| Tap density/(g/cm³)≥ | 0.6 | 0.8 |
| Particle size (D₅₀)/µm | 1-6 | 3 |

Example 4. A method for preparing a lithium iron phosphate precursor from a high-iron red mud is used which includes: mixing a red mud and 3.0 mol/L hydrochloric acid at a liquid-to-solid ratio of 10 to uniformly form a slurry, and pouring the slurry into a high-temperature reactor for a leaching reaction at 150°C for 4 hours at a pressure of 1.5 Mpa, and then performing, after the leaching reaction is completed, a solid-liquid separation to obtain a red mud leachate; then, adding a phosphate into the red mud leachate and slowly raising a temperature to 85°C, where a molar ratio of an added amount of the phosphate to aluminum ions is 3.5:1, and then performing a solid-liquid separation to obtain a homogeneous solution; subsequently adding the phosphate to the primary homogeneous solution to adjust a pH thereof to be 3.0 and control an iron-phosphorus ratio to range from 0.96-1.02, and then reacting at 85°C for 50 minutes, followed by performing a solid-liquid separation on the first homogeneous, to obtain a secondary homogeneous solution; adding pure water which has 4% of a volume of the secondary homogeneous solution, into the secondary homogeneous solution for cooling and dilution, and cooling rapidly for precipitation, where a precipitation temperature is 4°C, to finally obtain an iron(III) phosphate dihydrate product. The iron(III) phosphate dihydrate product is tested, and results are shown in Table 5.

**Table 5**

| Items | Standards of iron(III) phosphate dihydrate | Product of Example 4 |
|---|---|---|
| Iron (Fe) w/% | 28.5-30.0 | 29.5 |
| Phosphorus (P) | 16.2-17.2 | 16.77 |
| Iron-phosphorus ratio (Fe:P) | 0.96-1.02 | 0.9754 |
| Calcium (Ca) ≤ | 0.005 | 0.002 |
| Magnesium (Mg) ≤ | 0.005 | 0.004 |
| Sodium (Na) ≤ | 0.01 | 0.003 |
| Potassium (K) ≤ | 0.01 | 0.003 |
| Copper (Cu) ≤ | 0.005 | - |
| Zinc (Zn) ≤ | 0.005 | - |
| Manganese (Mn) ≤ | 0.02 | - |
| Aluminum (Al) ≤ | 0.03 | 0.02 |
| Titanium (Ti) ≤ | 0.15 | 0.05 |
| Cobalt (Co) ≤ | 0.005 | - |
| Plumbum (Pb) ≤ | 0.01 | - |
| Chromium (Cr) ≤ | 0.005 | - |
| Water content | 19.0-21.0 | 20.0 |
| Tap density/(g/cm³)≥ | 0.6 | 0.8 |
| Particle size (D₅₀)/µm | 1-6 | 3 |

Comparative Example 1. The difference between this Comparative Example 1 and Example 1 is that an acid leaching is not performed, and a pure water is used for leaching, and thus no iron(III) phosphate dihydrate product can be obtained.

Comparative Example 2. The difference between this Comparative Example 2 and Example 1 is that a time of the secondary homogeneous reaction is shortened as 10 min. An obtained ferric phosphate product meets standards. Results are shown in Table 6.

**Table 6**

| Projects | Standards of iron(III) phosphate dihydrate | Product of Comparative Example 2 |
|---|---|---|
| Iron (Fe) w/% | 28.5-30.0 | 28.9 |
| Phosphorus (P) | 16.2-17.2 | 16.3 |
| Iron-phosphorus ratio (Fe:P) | 0.96-1.02 | 0.9831 |
| Calcium (Ca) ≤ | 0.005 | 0.002 |
| Magnesium (Mg) ≤ | 0.005 | 0.002 |
| Sodium (Na) ≤ | 0.01 | 0.005 |
| Potassium (K) ≤ | 0.01 | 0.004 |
| Copper (Cu) ≤ | 0.005 | - |
| Zinc (Zn) ≤ | 0.005 | - |
| Manganese (Mn) ≤ | 0.02 | - |
| Aluminum (Al) ≤ | 0.03 | 0.01 |
| Titanium (Ti) ≤ | 0.15 | 0.02 |
| Cobalt (Co) ≤ | 0.005 | - |
| Plumbum (Pb) ≤ | 0.01 | - |
| Chromium (Cr) ≤ | 0.005 | - |
| Water content | 19.0-21.0 | 20.8 |
| Tap density/(g/cm³)≥ | 0.6 | 0.6 |
| Particle size (D₅₀)/µm | 1-6 | 5 |

Comparative Example 3. The difference between this comparative example and Example 1 is that temperatures of the first homogeneous reaction and secondary homogeneous reaction are 50°C. An obtained ferric phosphate product does not meet standards. Results are shown in Table 7.

**Table 7**

| Projects | Standards of iron(III) phosphate dihydrate | Product of Comparative Example 3 |
|---|---|---|
| Iron (Fe) w/% | 28.5-30.0 | 27.4 |
| Phosphorus (P) | 16.2-17.2 | 18.47 |
| Iron-phosphorus ratio (Fe:P) | 0.96-1.02 | 0.8226 |
| Calcium (Ca) ≤ | 0.005 | 0.008 |
| Magnesium (Mg) ≤ | 0.005 | 0.06 |
| Sodium (Na) ≤ | 0.01 | 0.02 |
| Potassium (K) ≤ | 0.01 | 0.002 |
| Copper (Cu) ≤ | 0.005 | - |
| Zinc (Zn) ≤ | 0.005 | - |
| Manganese (Mn) ≤ | 0.02 | - |
| Aluminum (Al) ≤ | 0.03 | 0.06 |
| Titanium (Ti) ≤ | 0.15 | 0.02 |
| Cobalt (Co) ≤ | 0.005 | - |
| Plumbum (Pb) ≤ | 0.01 | - |
| Chromium (Cr) ≤ | 0.005 | - |
| Water content | 19.0-21.0 | 16.7 |
| Tap density/(g/cm³)≥ | 0.6 | 0.9 |
| Particle size (D₅₀)/µm | 1-6 | 1 |

Comparative Example 4. The difference between this Comparative Example 4 and Example 1 is that a precipitation temperature is increased to be 15°C. An obtained ferric phosphate product does not meet standards. Results are shown in Table 8.

**Table 8**

| Projects | Standards of iron(III) phosphate dihydrate | Product of Comparative Example 4 |
|---|---|---|
| Iron (Fe) w/% | 28.5-30.0 | 29.0 |
| Phosphorus (P) | 16.2-17.2 | 17.0 |
| Iron-phosphorus ratio (Fe:P) | 0.96-1.02 | 0.9459 |
| Calcium (Ca) ≤ | 0.005 | 0.002 |
| Magnesium (Mg) ≤ | 0.005 | 0.002 |
| Sodium (Na) ≤ | 0.01 | 0.02 |
| Potassium (K) ≤ | 0.01 | 0.002 |
| Copper (Cu) ≤ | 0.005 | - |
| Zinc (Zn) ≤ | 0.005 | - |
| Manganese (Mn) ≤ | 0.02 | - |
| Aluminum (Al) ≤ | 0.03 | 0.02 |
| Titanium (Ti) ≤ | 0.15 | 0.02 |
| Cobalt (Co) ≤ | 0.005 | - |
| Plumbum (Pb) ≤ | 0.01 | - |
| Chromium (Cr) ≤ | 0.005 | - |
| Water content | 19.0-21.0 | 20.5 |
| Tap density/(g/cm³)≥ | 0.6 | 0.4 |
| Particle size (D₅₀)/µm | 1-6 | 5 |

Comparative Example 5. The difference between this Comparative Example 5 and Example 1 is that a pressure during the leaching is reduced to be 0.2 MPa. An obtained ferric phosphate product meets standards. Results are shown in Table 9.

**Table 9**

| Projects | Standards of iron(III) phosphate dihydrate | Product of Comparative Example 5 |
|---|---|---|
| Iron (Fe) w/% | 28.5-30.0 | 29.1 |
| Phosphorus (P) | 16.2-17.2 | 16.54 |
| Iron-phosphorus ratio (Fe:P) | 0.96-1.02 | 0.9756 |
| Calcium (Ca) ≤ | 0.005 | 0.002 |
| Magnesium (Mg) ≤ | 0.005 | 0.002 |
| Sodium (Na) ≤ | 0.01 | 0.003 |
| Potassium (K) ≤ | 0.01 | 0.002 |
| Copper (Cu) ≤ | 0.005 | - |
| Zinc (Zn) ≤ | 0.005 | - |
| Manganese (Mn) ≤ | 0.02 | - |
| Aluminum (Al) ≤ | 0.03 | 0.02 |
| Titanium (Ti) ≤ | 0.15 | 0.02 |
| Cobalt (Co) ≤ | 0.005 | - |
| Plumbum (Pb) ≤ | 0.01 | - |
| Chromium (Cr) ≤ | 0.005 | - |
| Water content | 19.0-21.0 | 19.8 |
| Tap density/(g/cm³)≥ | 0.6 | 0.9 |
| Particle size (D₅₀)/µm | 1-6 | 3 |

Comparative Example 6. The difference between this Comparative Example 6 and Example 1 is that a pH is controlled as 7 and no ferric phosphate product is obtained.

Various parameters and results of prepared products in the above Examples 1 to 4 and Comparative Examples 1 to 6 are shown in Table 10 below.

**Table 10**

| | Concen tration of hydroc hloric acid mol/L | Tempe rature of leachi ng °C | Pres sure Mpa | Tim e of leac hing h | Liquid-t o-solid ratio | Molar ratio of phosph ate to alumin um ions | Heat ing tern pera ture °C | pH | Time of second ary homog eneous reactio n min | Wate r conte nt % | Precipitation temperature °C | Whether HG/T 4701-20 21 is met |
|---|---|---|---|---|---|---|---|---|---|---|---|---|
| Examp le 1 | 5.4 | 230 | 2 | 6 | 15 | 5 | 100 | 1.8 | 90 | 8 | 1 | YSE |
| Examp le 2 | 2.5 | 110 | 0.5 | 3 | 7 | 3 | 80 | 6 | 30 | 2 | 9 | YES |
| Examp le 3 | 3 | 150 | 1 | 4 | 10 | 3.5 | 85 | 3 | 50 | 4 | 4 | YES |
| Examp le 4 | 4 | 190 | 1.5 | 5 | 12 | 4 | 90 | 5 | 70 | 6 | 7 | YES |
| Compa rative Examp le 1 | 0 | 230 | 2 | 6 | 15 | 5 | 100 | 1.8 | 90 | 8 | 1 | - |
| Compa rative Examp le 2 | 5.4 | 230 | 2 | 6 | 15 | 5 | 100 | 1.8 | 10 | 8 | 1 | YES |
| Compa rative Examp le 3 | 5.4 | 230 | 2 | 6 | 15 | 5 | 50 | 1.8 | 90 | 8 | 1 | NO |
| Compa rative Examp le 4 | 5.4 | 230 | 2 | 6 | 15 | 5 | 100 | 1.8 | 90 | 8 | 15 | NO |
| Compa rative Examp le 5 | 5.4 | 230 | 0.2 | 6 | 15 | 5 | 100 | 1.8 | 90 | 8 | 1 | YES |
| Compa rative Examp le 6 | 5.4 | 230 | 2 | 6 | 15 | 5 | 100 | 7 | 90 | 8 | 1 | - |

It can be seen from Table 10 that the method provided in the invention can be used to prepare the iron(III) phosphate dihydrate, and all indicators of prepared products meet requirements of standard HG/T 4701-2021 "Ferric phosphate for batteries".

It can be seen from Comparative Examples 1 and 5 in Table 10 that an acid leaching is a necessary process for preparing the ferric phosphate, but parameters of an acid leaching process are required to be optimized to achieve precisely selective leaching, laying a foundation for a subsequent preparation of the ferric phosphate. A pressure is reduced, and thus the ferric phosphate can be prepared but a yield thereof is low due to an insufficient leaching. It can be seen from Comparative Example 2 that a secondary homogeneous reaction is controlled to have a certain reaction time in order for the ferric phosphate to fully react and to be leached out in a subsequent process to form a stable chemical form. However, a shortened reaction time of the secondary homogeneous reaction will lead to a decreased yield and unstable ferric phosphate. It can be seen from Comparative Example 6 that pH is a key factor affecting a synthesis of the ferric phosphate, and the ferric phosphate can only be generated within a strict range of pH. It can be seen from Comparative Examples 3 and 4 that temperatures of the first homogeneous reaction and secondary homogeneous reaction and a subsequent precipitation temperature are key factors in a separation and removal of impurities from the ferric phosphate. On the one hand, it is to quickly generate a target product, and on the other hand, it is to achieve a regulation on impurities and on a crystallization of the target product by different dynamic temperature fields in continuous homogeneous reactions, mainly for impurity removal. A control of the precipitation temperature is also for a purpose of separating and removing impurities and finally obtaining a target precipitate and a separation liquid, to obtain the iron(III) phosphate dihydrate.

One or more technical solutions in the invention have at least the following technical effects or advantages. The method provided in the invention separates the iron(III) phosphate dihydrate through various substance characteristics of phosphates, thereby achieving not adding a variety of exogenous substances such as extractants, inducers, separation agents, metal capture agents, etc., reducing externally added ingredients and greatly reducing costs. At the same time, a use of the red mud to prepare the iron(III) phosphate dihydrate shortens existing process flow, reduces raw material costs, and achieves high-value utilization of the red mud. It also opens up new ways to solve a problem of disposal and utilization of solid hazardous waste in an aluminum industry.

The above descriptions are only embodiments of the disclosure, enabling those skilled in the art to understand or implement the disclosure. Various modifications to these embodiments will be readily apparent to those skilled in the art, and the generic principle defined in the disclosure may be practiced in other embodiments without departing from the spirit or scope of the disclosure. Therefore, the invention is not to be limited to the embodiments shown in the disclosure but is to be accorded the widest scope consistent with the principles and novel features claimed in the invention.

## Claims

1. A method for preparing a lithium iron phosphate precursor from a high-iron red mud, comprising:
mixing the high-iron red mud and an acid solution, and then leaching to obtain a red mud leachate;
mixing the red mud leachate and a phosphate, and then performing a first homogeneous reaction to obtain a primary homogeneous solution;
adjusting a pH value and iron-phosphorus ratio of the primary homogeneous solution, and then performing a second homogeneous reaction to obtain a secondary homogeneous solution; and
precipitating the secondary homogeneous solution to obtain the lithium iron phosphate precursor.

2. The method for preparing the lithium iron phosphate precursor from the high-iron red mud according to claim 1, wherein the acid solution comprises a hydrochloric acid, a mass concentration of the hydrochloric acid ranging from 2.5 mol/L to 5.4 mol/L.

3. The method for preparing the lithium iron phosphate precursor from the high-iron red mud according to claim 1, wherein a temperature of the leaching ranges from 110°C to 230°C, a pressure of the leaching ranging from 0.5 MPa to 2 Mpa, a time of the leaching ranging from 3h to 6h.

4. The method for preparing the lithium iron phosphate precursor from the high-iron red mud according to claim 1, wherein a liquid-to-solid ratio of mixture of the acid solution and the high-iron red mud is (7-15):1.

5. The method for preparing the lithium iron phosphate precursor from the high-iron red mud according to claim 1, wherein in the first homogeneous reaction, a molar ratio of the phosphate to aluminum ions in solution is (3-5):1, a temperature of the first homogeneous reaction ranging from 80°C-100°C.

6. The method for preparing the lithium iron phosphate precursor from the high-iron red mud according to claim 1, wherein the phosphate comprises a normal salt and an acid salt, the normal salt comprising at least one of a sodium phosphate and a calcium phosphate, the acid salt comprising at least one of a sodium dihydrogen phosphate and an ammonium dihydrogen phosphate.

7. The method for preparing the lithium iron phosphate precursor from the high-iron red mud according to claim 1, wherein a pH value of the secondary homogeneous reaction ranges from 1.8 - 6, an iron-phosphorus ratio of the secondary homogeneous reaction ranging from 0.96 - 1.02, a reaction time of the secondary homogeneous reaction ranging from 30 min - 90 min.

8. The method for preparing the lithium iron phosphate precursor from the high-iron red mud according to claim 1, wherein the precipitating the secondary homogeneous solution to obtain the lithium iron phosphate precursor comprises:
naturally cooling the secondary homogeneous solution to a room temperature, then adding an ice water for dilution, and then performing a low-temperature precipitation and aging to obtain the lithium iron phosphate precursor.

9. The method for preparing the lithium iron phosphate precursor from the high-iron red mud according to claim 1, wherein in the adding an ice water for dilution, a mass of the ice water added ranges from 2% to 8% of a mass of the secondary homogeneous solution.

10. The method for preparing the lithium iron phosphate precursor from the high-iron red mud according to claim 1, wherein a temperature of the low-temperature precipitation and aging ranges from 1°C to 9°C, a time of the low-temperature precipitation and aging ranging from 12h to 36h.
